(19) Europäisches Patentamt / European Patent Office / Office européen des brevets

(11) **EP 4 366 199 A1**

(12) **EUROPEAN PATENT APPLICATION**
published in accordance with Art. 153(4) EPC

(43) Date of publication:
**08.05.2024 Bulletin 2024/19**

(21) Application number: **22831940.6**

(22) Date of filing: **27.06.2022**

(51) International Patent Classification (IPC):
**H04L 1/00** $^{(2006.01)}$ **H04B 7/0413** $^{(2017.01)}$

(52) Cooperative Patent Classification (CPC):
**H04B 7/0413; H04L 1/00**

(86) International application number:
**PCT/CN2022/101453**

(87) International publication number:
**WO 2023/274126 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 CN 202110739227**

(71) Applicant: **Vivo Mobile Communication Co., Ltd.
Dongguan, Guangdong 523863 (CN)**

(72) Inventors:
• **SUN, Bule**
  **Dongguan, Guangdong 523863 (CN)**
• **LIU, Hao**
  **Dongguan, Guangdong 523863 (CN)**
• **JIANG, Dajie**
  **Dongguan, Guangdong 523863 (CN)**

(74) Representative: **Lavoix
Bayerstraße 83
80335 München (DE)**

(54) **TRANSMISSION PROCESSING METHOD AND APPARATUS, COMMUNICATION DEVICE, AND READABLE STORAGE MEDIUM**

(57) This application discloses a transmission processing method and apparatus, a communication device, and a readable storage medium, and pertains to the field of communications technologies. The transmission processing method in embodiments of this application includes: splitting, by a transmit end, a delay-Doppler domain resource block corresponding to each antenna in L antennas into L sub-blocks of equal size, L being an integer greater than 1; and performing, by the transmit end, delay-Doppler domain block encoding on the L antennas at the granularity of sub-block.

A transmit end splits a delay-Doppler domain resource block corresponding to each antenna in L antennas into L sub-blocks of equal size — 401

The transmit end performs delay-Doppler domain block encoding on the L antennas at the granularity of sub-block — 402

FIG. 4

**Description**

**CROSS-REFERENCE TO RELATED APPLICATIONS**

This application claims priority to Chinese Patent Application No. 202110739227.8, filed in China on June 30, 2021, which is incorporated herein by reference in its entirety.

**TECHNICAL FIELD**

This application relates to the field of communications technologies, and in particular, to a transmission processing method and apparatus, a communication device, and a readable storage medium.

**BACKGROUND**

With the development of communications technologies, the orthogonal time frequency space (Orthogonal Time Frequency Space, OTFS) modulation technique is applied in the communications technologies. This technique logically maps information in a data packet of M×N into one M×N grid point on a two-dimensional delay-Doppler domain plane, that is, pulses within each grid point modulate one symbol of the data packet. The analysis of sparse channel matrices in the delay-Doppler domain using the OTFS modulation technique allows for tighter and more flexible encapsulation of reference signals. Because current discussion on the delay-Doppler domain is only for single antenna, how to apply multi-input multi-output (multiple-input multiple-output, MIMO) in the delay-Doppler domain has become an urgent problem.

**SUMMARY**

Embodiments of this application provide a transmission processing method and apparatus, a communication device, and a readable storage medium, which can implement application of MIMO to the delay-Doppler domain.

According to a first aspect, a transmission processing method is provided, including:

splitting, by a transmit end, a delay-Doppler domain resource block corresponding to each antenna in L antennas into L sub-blocks of equal size, L being an integer greater than 1; and
performing, by the transmit end, delay-Doppler domain block encoding on the L antennas at the granularity of sub-block.

According to a second aspect, a transmission processing apparatus is provided, including:

a splitting module, configured to split a delay-Doppler domain resource block corresponding to each antenna in L antennas of a transmit end into L sub-blocks of equal size, L being an integer greater than 1; and
an encoding module, configured to perform delay-Doppler domain block encoding on the L antennas at the granularity of sub-block.

According to a third aspect, a terminal is provided, where the terminal includes a processor, a memory, and a program or instructions stored in the memory and capable of running on the processor, and when the program or instructions are executed by the processor, the steps of the method according to the first aspect are implemented.

According to a fourth aspect, a terminal is provided, including a processor and a communication interface, where the processor is configured to split a delay-Doppler domain resource block corresponding to each antenna in L antennas of the terminal into L sub-blocks of equal size, L being an integer greater than 1; and perform delay-Doppler domain block encoding on the L antennas at the granularity of sub-block.

According to a fifth aspect, a network-side device is provided, where the network-side device includes a processor, a memory, and a program or instructions stored in the memory and capable of running on the processor, and when the program or instructions are executed by the processor, the steps of the method according to the first aspect are implemented.

According to a sixth aspect, a network-side device is provided, including a processor and a communication interface, where the processor is configured to split a delay-Doppler domain resource block corresponding to each antenna in L antennas of the network-side device into L sub-blocks of equal size, L being an integer greater than 1; and perform delay-Doppler domain block encoding on the L antennas at the granularity of sub-block.

According to a seventh aspect, a readable storage medium is provided, where a program or instructions are stored in the readable storage medium, and when the program or instructions are executed by a processor, the steps of the method according to the first aspect are implemented.

According to an eighth aspect, an embodiment of this application provides a chip, where the chip includes a processor and a communication interface, the communication interface is coupled to the processor, and the processor is configured to run a program or instructions to implement the steps of the method according to the first aspect.

According to a ninth aspect, a computer program product is provided, where the computer program product is stored in a non-transitory storage medium, and the computer program product is executed by at least one processor to implement the method according to the first aspect.

In the embodiments of this application, the transmit end splits a delay-Doppler domain resource block corresponding to each antenna in the L antennas into L sub-blocks of equal size; and the transmit end performs delay-Doppler domain block encoding at the granularity of sub-block to obtain delay-Doppler domain information carried on the delay-Doppler domain resource block. This enables the application of MIMO in the delay-Doppler domain, thereby improving transmission performance.

## BRIEF DESCRIPTION OF DRAWINGS

FIG. 1 is a structural diagram of a network system to which the embodiments of this application are applicable;
FIG. 2 is a schematic diagram of a channel response relationship on different planes;
FIG. 3 is a schematic diagram of pilot mapping in the delay-Doppler domain;
FIG. 4 is a flowchart of a transmission processing method according to an embodiment of this application;
FIGs. 5 to 12 are example diagrams of different splitting manners in a transmission processing method according to an embodiment of this application;
FIGs. 13 to 17 are example diagrams of a first guard period in different splitting manners in a transmission processing method according to an embodiment of this application;
FIGs. 18 to 19 are example diagrams of pilot settings in a transmission processing method according to an embodiment of this application;
FIG. 20 is a schematic framework flowchart of a transmission processing method according to an embodiment of this application;
FIG. 21 is a structural diagram of a transmission processing apparatus according to an embodiment of this application;
FIG. 22 is a structural diagram of a communication device according to an embodiment of this application;
FIG. 23 is a structural diagram of a terminal according to an embodiment of this application; and
FIG. 24 is a structural diagram of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, in the specification and claims, "and/or" represents presence of at least one of connected objects, and the symbol "/" in this specification usually indicates an "or" relationship between associated objects.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

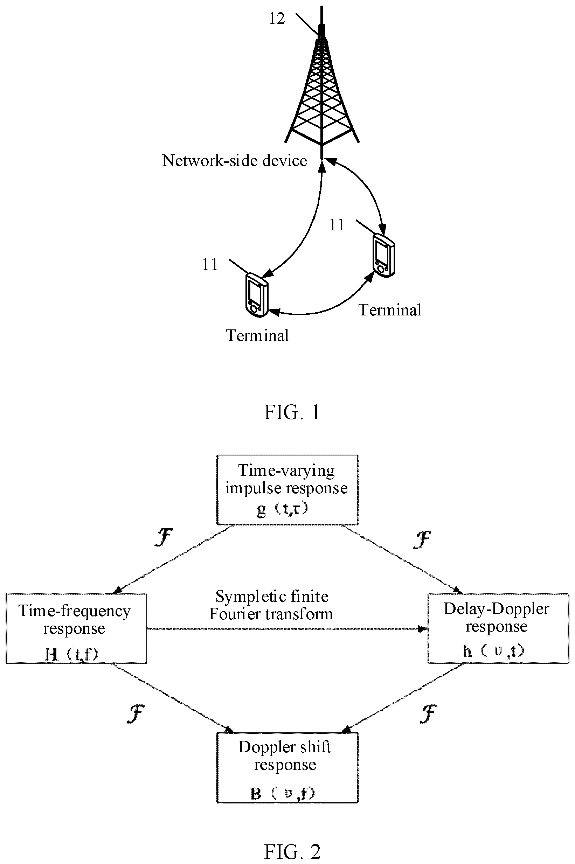

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that a specific type of the terminal 11 is not limited in the embodiments of this application. The network-side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, WiFi) node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

For ease of understanding, the following describes some content included in the embodiments of this application:

1. OTFS background

Characteristics of delay and Doppler of channels are essentially determined by multipath channels. Signals arriving at a receiver through different paths have different propagation distances, resulting in different arrival times. For example, if two echoes $S_1$ and $S_2$ have traveled distances $d_1$ and $d_2$ respectively to arrive at the receiver, a time difference between their arrivals is $\Delta t = \frac{|d_1 - d_2|}{c}$, where $c$ is the speed of light. Due to the time difference between the echoes $S_1$ and $S_2$, their coherent superposition at the receiver side causes amplitude fluctuations in an observed signal. Similarly, Doppler spread for the multipath channel is also caused by a multipath effect. As known, the Doppler effect is caused by existence of relative velocity at the transmit end and the receive end, and signals arriving at the receiver via different paths have different angles of incidence with respect to the antenna normal, which results in differences in relative velocities and further leads to different Doppler shifts of signals from different paths. Assuming that the original frequency of the signal is $f_0$, the relative velocity at the transmit end and the receive end is $\Delta v$, and the angle of incidence of the signal with respect to the antenna normal at the receive end is $\theta$, $\Delta f = \frac{\Delta v}{f} \cos \theta$. Apparently, when two echoes $S_1$ and $S_2$ arrive at the receiver-end antenna via different paths with different angles of incidence $\theta_1$ and $\theta_2$, respectively, the resulting Doppler shifts are also different. In summary, the signal observed at the receiver end is a superposition of component signals with different delays and Doppler shifts from different paths. Delay-Doppler analysis for the channel helps gather delay-Doppler information for each path, thus reflecting delay-Doppler response of the channel.

The OTFS modulation technique logically maps information in a data packet with a size of $M \times N$ into one $M \times N$ grid point on a two-dimensional delay-Doppler domain plane, that is, pulses within each grid point modulate one symbol of the data packet. Further, one set of orthogonal two-dimensional basis functions is designed to transform a data set from the delay-Doppler domain plane of $M \times N$ to the time-frequency domain plane of $N \times M$. Such transform is mathematically known as inverse sympletic finite Fourier transform (Inverse Sympletic Finite Fourier Transform, ISFFT). Correspondingly, transform from the time-frequency domain to the delay-Doppler domain is known as sympletic finite Fourier transform (Sympletic Finite Fourier Transform, SFFT). The physical meaning behind this lies in that the signal delay-Doppler effect is actually a linear superposition effect of a series of echoes with different time and frequency offsets of a signal passing through a multipath channel. In this sense, delay-Doppler analysis and time-frequency domain analysis can be obtained through mutual transform between the inverse sympletic finite Fourier transform and the sympletic finite Fourier transform.

By doing so, the OTFS technique transforms the time-varying multipath channel into a time-invariant (within a specific duration) two-dimensional delay-Doppler domain channel, directly reflecting the delay-Doppler response characteristics of the channel resulting from geometric characteristics of relative positions of reflectors between the transmitter and receiver in radio links. This eliminates difficulties in tracking time-varying fading characteristics in conventional time-frequency domain analysis; instead, all diversity characteristics of the channel in the time-frequency domain are extracted through delay-Doppler domain analysis. In practical systems, because the number of delay paths and Doppler shifts of the channel is much smaller than the number of time- and frequency-domain responses of the channel, the channel impulse response matrix represented by the delay-Doppler domain features sparsity. The analysis of sparse channel matrices in the delay-Doppler domain using the OTFS technique allows for tighter and more flexible encapsulation of reference signals.

OTFS modulation defines quadrature amplitude modulation (Quadrature Amplitude Modulation, QAM) symbols on the delay-Doppler plane and transforms them to the time-frequency domain for transmission. At the receive end, it is returned back to the delay-Doppler domain for processing. Therefore, a radio channel response analysis method in the delay-Doppler domain can be introduced. When a signal passes through a linear time-varying radio channel, the relationship between its channel responses expressed on different planes is shown in FIG. 2.

In FIG. 2, the SFFT transform formula is:

$$h(\tau, v) = \int \int H(t, f) e^{-j2\pi(vt - f\tau)} d\tau dv \quad (1)$$

Correspondingly, the ISFFT transform formula is:

$$H(t, f) = \int \int h(\tau, v) e^{j2\pi(vt - f\tau)} d\tau dv \quad (2)$$

When a signal passes through a linear time-varying channel, a time-domain received signal is $r(t)$, a corresponding frequency-domain received signal is $R(f)$, and $r(t) = \mathcal{F}^{-1}\{R(f)\}$, where $r(t)$ may be expressed as follows:

$$r(t) = s(t) * h(t) = \int g(t, \tau) s(t - \tau) d\tau \quad (3)$$

Based on the relationship in FIG. 2, it can be learned that:

$$g(t, \tau) = \int h(v, \tau) e^{j2\pi vt} dv \quad (4)$$

(4) is substituted into (3) to obtain the following:

$$r(t) = \int \int h(v, \tau) s(t - \tau) e^{j2\pi vt} d\tau dv \quad (5)$$

Based on the relationship shown in FIG. 2, the classical Fourier transform theory, and formula (5), it can be learned that:

$$r(t) = \int\int h(\nu,\tau)\left(\int S(f)\,e^{j2\pi f(t-\tau)}df\right)e^{j2\pi\nu t}d\tau d\nu$$

$$= \int\left(\int\int h(\nu,\tau)e^{j2\pi(\nu t-f\tau)}d\tau d\nu\right)S(f)e^{j2\pi ft}df$$

$$= \int H(t,f)S(f)e^{j2\pi ft}df$$

$$= \mathcal{F}^{-1}\{R(f)\} \quad (6)$$

where $\nu$ represents a delay variable, $\tau$ represents a Doppler variable, $f$ represents a frequency variable, and t represents a time variable.

Equation (6) implies that delay-Doppler domain analysis in the OTFS system can rely on the existing communication framework established in the time-frequency domain, with additional signal processing steps performed at the transmit end and the receive end. Moreover, the additional signal processing includes only Fourier transform, which can be implemented entirely using existing hardware, without the need for additional modules. Such high compatibility with the existing hardware system greatly facilitates the application of the OTFS system. In practical systems, the OTFS technique can be conveniently implemented as pre- and post-processing modules for one filtered OFDM system, making it highly compatible with existing multi-carrier systems under the NR technology architecture.

When OTFS is combined with the a multi-carrier system, the implementation at the transmit end is as follows: QAM symbols containing information to be sent are carried using waveforms on the delay-Doppler plane, undergo two-dimensional ISFFT to transform into waveforms on the time-frequency domain plane of the conventional multi-carrier system, and then undergo symbol-level one-dimensional inverse fast Fourier transform (Inverse Fast Fourier Transform, IFFT) and serial-parallel conversion, and then become time-domain samples for transmission.

The receive end in the OTFS system roughly performs the inverse process of the transmit end: time-domain samples received by the receiver are processed through parallel-serial conversion and symbol-level one-dimensional fast Fourier transform (Fast Fourier Transform, FFT), transformed into waveforms on the time-frequency domain plane, and then undergo SFFT to transform into waveforms on the delay-Doppler domain plane. QAM symbols carried using the delay-Doppler domain waveforms are processed by the receiver, including channel estimation and equalization, demodulation, decoding, and the like.

The advantages of OTFS modulation are mainly reflected in the following aspects:
OTFS modulation transforms a time-varying fading channel between the transmitter and the receiver in the time-frequency domain into a deterministic non-fading channel in the delay-Doppler domain. In the delay-Doppler domain, each symbol in a set of information symbols transmitted at once experiences the same static channel response and signal-to-noise ratio (Signal Noise Ratio, SNR).

The OTFS system analyzes a delay-Doppler image to identify reflectors in the physical channel and uses receiver equalizers to coherently combine the energy from different reflected paths, actually providing a non-fading static channel response. Utilizing this static channel characteristic, the OTFS system does not require closed-loop channel adaptation like an OFDM system to deal with rapidly changing channels, thereby improving system robustness and reducing system design complexity.

Due to the significantly smaller number of delay-Doppler states in the delay-Doppler domain compared to the time-frequency domain, the channel in the OTFS system can be expressed in a very compact form. Channel estimation in the OTFS system incurs fewer overheads and achieves higher accuracy.

Another advantage of OTFS is its performance in extreme Doppler channels. Through analysis of the delay-Doppler image under appropriate signal processing parameters, the Doppler characteristics of the channel can be fully presented, which facilitates signal analysis and processing in Doppler-sensitive scenarios (such as high-speed mobility and millimeter-wave).

In summary, channel estimation in the OTFS system is performed as follows: the transmitter maps pilot pulses onto the delay-Doppler domain, and the receiver estimates the channel response $h(\nu,\tau)$ of the delay-Doppler domain by analyzing the delay-Doppler image of the pilots, so as to obtain expression of channel response in the time-frequency domain according to the relationship in FIG. 2. This facilitates application of existing techniques in the time-frequency domain for signal analysis and processing. Pilot mapping onto the delay-Doppler plane can be done in a manner shown in FIG. 2.

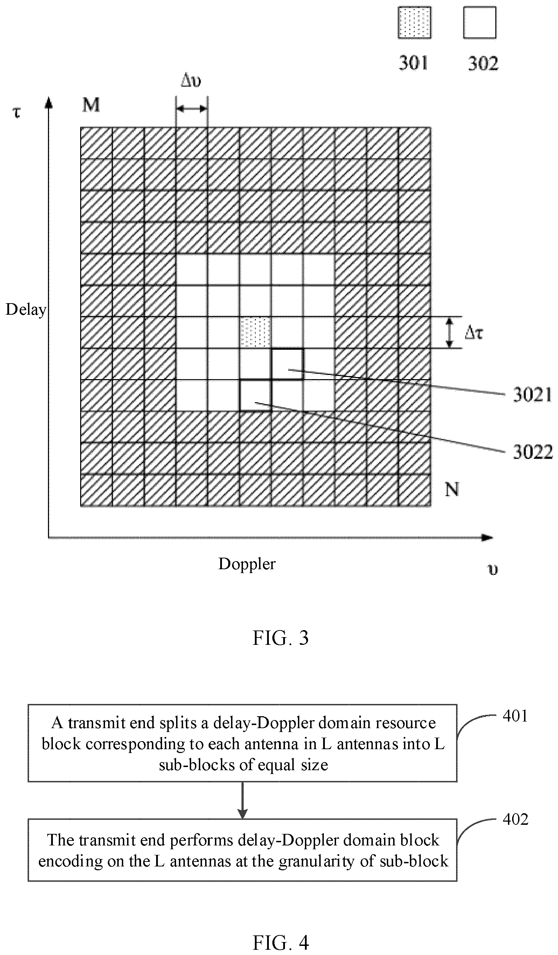

In FIG. 3, a transmit signal includes a single-point pilot (301) located at $(l_p, k_p)$, protection symbols (302) with an area of $(2l_\nu + 1)(4k_\nu + 1) - 1$ surrounding the single-point pilot, and a data portion of $MN - (2l_\nu + 1)(4k_\nu + 1)$. At the receive end, two offset peaks (such as 3021 and 3022) appear in the protection band of the delay-Doppler domain grid points, indicating presence of two secondary paths with different delay Doppler in addition to the primary path. Amplitude, delay, and Doppler parameters of all secondary paths are measured to obtain expression of the channel in the delay-Doppler domain, that is, $h(\nu, \tau)$. To prevent data on signal receiving grid points from contaminating pilot symbols, leading to inaccurate channel estimation, the area of the protection symbols needs to meet the following condition:

$$l_\tau \geq \tau_{max} M\Delta f, k_\nu \geq \nu_{max} N\Delta T \quad (7)$$

$\tau_{max}$ and $\nu_{max}$ are respectively the maximum delay and maximum Doppler shift of all paths in the channel, and multiple protection symbols 302 surround the single-point pilot 301 to form the protection band, with the multiple protection symbols 302 corresponding to blank resource elements.

The following describes in detail a transmission processing method provided in the embodiments of this application by using some embodiments and application scenarios thereof with reference to the accompanying drawings.

Referring to FIG. 4, FIG. 4 is a flowchart of a transmission processing method according to an embodiment of this application. As shown in FIG. 4, the method includes the following steps.

Step 401: A transmit end splits a delay-Doppler domain resource block corresponding to each antenna in L antennas into L sub-blocks of equal size, L being an integer greater than 1.

In this embodiment of this application, the transmit end may be understood as a terminal or a network-side device, and the L antennas are all or part of antennas of the transmit end. The transmit end may use the L antennas to implement multi-input multi-output to improve transmission performance.

Optionally, in some embodiments, the L sub-blocks obtained by splitting the delay-Doppler domain resource blocks corresponding to different antennas have a same position in the delay-Doppler domain. For example, the delay-Doppler domain resource blocks corresponding to the antennas are split in the same manner, and the L sub-blocks obtained by splitting the delay-Doppler domain resource blocks corresponding to each antenna are of a same size and position.

Step 402: The transmit end performs delay-Doppler domain block encoding on the L antennas at the granularity of sub-block.

In this embodiment of this application, after delay-Doppler domain block encoding is performed at the granularity of sub-block, the delay-Doppler domain information carried on each delay-Doppler domain resource block can be obtained and then transmitted. The specific process of transmission may include: first converting the delayed Doppler information to the time-frequency domain, and then mapping it to a corresponding resource for transmission.

In this embodiment of this application, the transmit end splits a delay-Doppler domain resource block corresponding to each antenna in the L antennas into L sub-blocks of equal size; and the transmit end performs delay-Doppler domain block encoding at the granularity of sub-block to obtain delay-Doppler domain information carried on the delay-Doppler domain resource block. This enables the application of MIMO in the delay-Doppler domain, thereby improving transmission performance.

Optionally, delay-Doppler domain coordinates within each sub-block are continuous or cyclically continuous.

In this embodiment of this application, the delay-Doppler domain coordinates within the sub-block being continuous or cyclically continuous may be understood as the delay domain coordinates and Doppler domain coordinates of grid points within the sub-block being continuous or cyclically continuous. Cyclically continuous may include the delay domain coordinates being cyclically continuous or the Doppler domain coordinates being cyclically continuous. The delay domain coordinates being cyclically continuous may be understood as that one sub-block has two portions in the delay direction, the delay domain coordinates of grid points within each portion are continuous, coordinates of the delay domain grid points within one portion include the maximum delay domain coordinates and coordinates of the grid points in the other portion include the minimum delay domain coordinates. The Doppler domain coordinates being cyclically continuous may be understood as that one sub-block has two portions in the Doppler direction, Doppler domain coordinates of grid points within each portion are continuous, coordinates of grid points within one portion include the maximum Doppler domain coordinates, and Doppler coordinates of grid points in the other portion include the minimum delay domain coordinates.

Optionally, in some embodiments, a direction of splitting the delay-Doppler domain resource block includes at least one of the following: a delay direction and a Doppler direction.

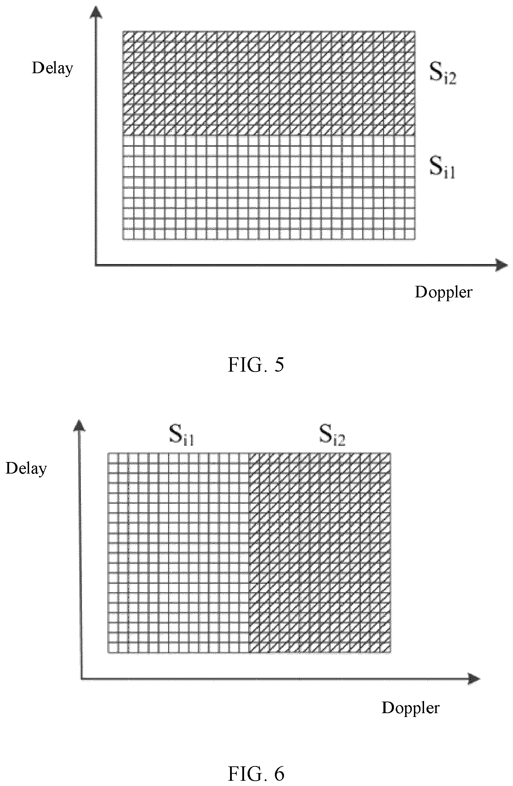

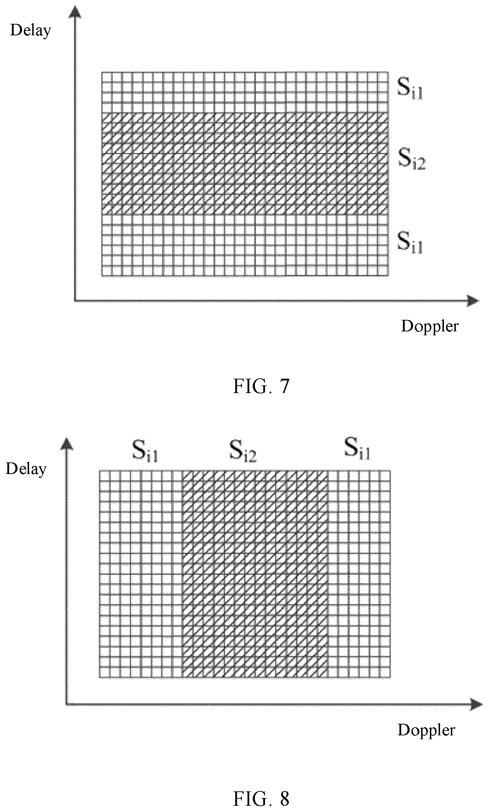

In this embodiment of this application, splitting along one direction is illustrated as an example. For example, when L is equal to 2, a splitting manner is shown in FIGs. 5 to 8, and $S_{ij}$ in the figures denotes the j-th sub-block of the i-th antenna. In a case of being continuously split into two sub-blocks in the delay direction, a splitting result of a delay-Doppler domain resource block corresponding to the i-th antenna is shown in FIG. 5. In a case of being continuously split into two sub-blocks in the Doppler direction, a splitting result of a delay-Doppler domain resource block corresponding to the i-th antenna is shown in FIG. 6. In a case of being cyclically continuously split into two sub-blocks in the delay direction, a splitting result of a delay-Doppler domain resource block corresponding to the i-th antenna is shown in FIG. 7. In a case of being cyclically continuously split into two sub-blocks in the Doppler direction, a splitting result of a delay-Doppler domain resource block corresponding to the i-th antenna is shown in FIG. 8.

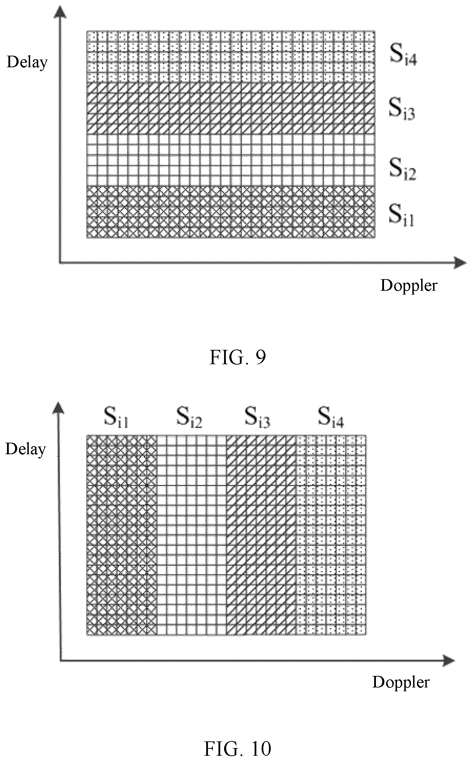

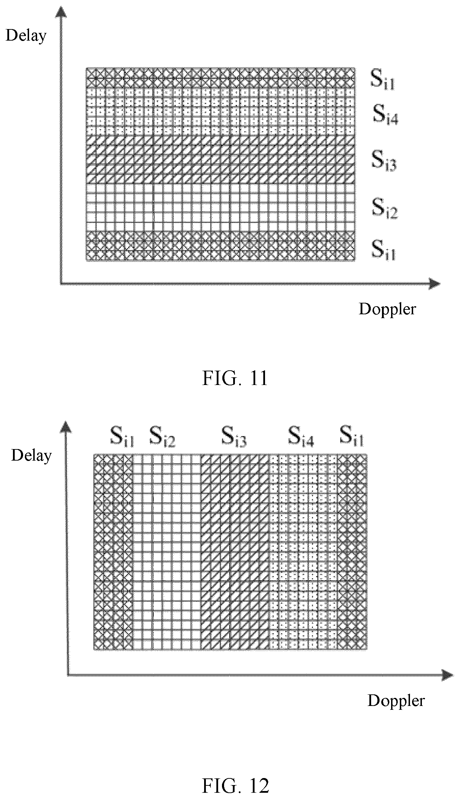

When L is equal to 4, a splitting manner is shown in FIGs. 9 to 12, and $S_{ij}$ in the figures denotes the j-th sub-block of the i-th antenna. In a case of being continuously split into four sub-blocks in the delay direction, a splitting result of a delay-Doppler domain resource block corresponding to the i-th antenna is shown in FIG. 9. In a case of being continuously split into four sub-blocks in the Doppler direction, a splitting result of a delay-Doppler domain resource block corresponding to the i-th antenna is shown in FIG. 10. In a case of being cyclically continuously split into four sub-blocks in the delay direction, a splitting result of a delay-Doppler domain resource block corresponding to the i-th antenna is shown in FIG. 11. In a case of being cyclically continuously split into four sub-blocks in the Doppler direction, a splitting result of a delay-Doppler domain resource block corresponding to the i-th antenna is shown in FIG. 12.

It should be noted that although the order of the sub-blocks shown in the figures is arranged from left to right or from bottom to top, it may actually be other ordering manners, for example, from right to left or from top to bottom, or even lack of order. Therefore, the j-th sub-block in this embodiment of this application is not the j-th sub-block under the sorting modes given in the figures, but may alternatively be the j-th sub-block under any one of specified sorting modes. In other words, the j-th sub-block described above may be understood as the j-th sub-block under a specific logical sorting rule.

Optionally, in some embodiments, that the transmit end performs delay-Doppler domain block encoding at the granularity of sub-block to obtain delay-Doppler domain information carried on the delay-Doppler domain resource block includes:

> determining first delay-Doppler domain information carried on part of sub-blocks of L*L sub-blocks; and
> performing mapping on the first delay-Doppler domain information based on a mapping relationship of delay-Doppler domain block encoding to obtain second delay-Doppler domain information carried on remaining sub-blocks of the L*L sub-blocks; where
> the L*L sub-blocks are all sub-blocks obtained through splitting delay-Doppler domain resource blocks corresponding to the L antennas.

In this embodiment of this application, the antenna may be understood as a physical antenna or an antenna port (for example, two or three physical antennas form one antenna port).

Optionally, in a case that L=2, the part of sub-blocks include a first sub-block and a second sub-block, and the remaining sub-blocks include a third sub-block and a fourth sub-block; where

> the first sub-block is one of the 1st sub-block corresponding to the 1st antenna and the 2nd sub-block corresponding to the 2nd antenna, and the third sub-block is the other of the 1st sub-block corresponding to the 1st antenna and the 2nd sub-block corresponding to the 2nd antenna; and
> the second sub-block is one of the 2nd sub-block corresponding to the 1st antenna and the 1st sub-block corresponding to the 2nd antenna, and the fourth sub-block is the other of the 2nd sub-block corresponding to the 1st antenna and the 1st sub-block corresponding to the 2nd antenna.

In this embodiment of this application, the second delay-Doppler domain information $S_3$ carried on the third sub-block meets: $\mathbf{S_3} = \mathbf{S_1^*}$, where $S_1^*$ denotes a conjugate of each element of $S_1$, and $S_1$ denotes the first delay-Doppler domain information carried on the first sub-block or denotes information obtained by reordering the first delay-Doppler domain information carried on the first sub-block; and

the second delay-Doppler domain information $S_4$ carried on the fourth sub-block meets: $S_4 = -S_2^*$, where $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block.

For example, in some embodiments, delay-Doppler domain information $S_{12}$ carried on the 2nd sub-block of the 1st antenna and delay-Doppler domain information $S_{11}$ carried on the 1st sub-block of the 1st antenna may be configured first, and then delay-Doppler domain information $S_{21}$ carried on the 1st sub-block of the 2nd antenna and delay-Doppler domain information $S_{22}$ carried on the 2nd sub-block of the 2nd antenna are determined based on a mapping relationship for delay-Doppler domain block encoding. The mapping relationship may meet:

$S_{21} = -S_{12}^*$, where $S_{12}^*$ denotes a conjugate of each element of S12; and $S_{22} = S_{11}^*$, where $S_{11}^*$ denotes a conjugate of each element of S11; or

$S_{21} = -\hat{S}_{12}^*$, where $\hat{S}_{12}^*$ denotes a conjugate of each element of $\hat{S}_{12}$, and $\hat{S}_{12}$ is obtained by reordering based on

$S_{12}$; and $S_{22} = \hat{S}_{11}^{*}$, where $\hat{S}_{11}^{*}$ denotes a conjugate of each element of $\hat{S}_{11}$, and $\hat{S}_{11}$ is obtained through reordering based on $S_{11}$.

Certainly, in other embodiments, a value of the sub-block on the left of the mapping relationship equal sign may alternatively be first determined and then a value of the sub-block on the right of the equal sign is determined based on the mapping relationship.

Optionally, in a case that L=4, the part of sub-blocks include a first sub-block, a second sub-block, a third sub-block, and a fourth sub-block, and the remaining sub-blocks include a fifth sub-block, a sixth sub-block, a seventh sub-block, and an eighth sub-block; where

the first sub-block is one of the 2nd sub-block corresponding to the 1st antenna and the 1st sub-block corresponding to the 3rd antenna, and the fifth sub-block is the other of the 2nd sub-block corresponding to the 1st antenna and the 1st sub-block corresponding to the 3rd antenna;

the second sub-block is one of the 1st sub-block corresponding to the 1st antenna and the 2nd sub-block corresponding to the 3rd antenna, and the sixth sub-block is the other of the 1st sub-block corresponding to the 1st antenna and the 2nd sub-block corresponding to the 3rd antenna;

the third sub-block is one of the 4th sub-block corresponding to the 2nd antenna and the 3rd sub-block corresponding to the 4th antenna, and the seventh sub-block is the other of the 4th sub-block corresponding to the 2nd antenna and the 3rd sub-block corresponding to the 4th antenna; and

the fourth sub-block is one of the 3rd sub-block corresponding to the 2nd antenna and the 4th sub-block corresponding to the 4th antenna, and the eighth sub-block is the other of the 3rd sub-block corresponding to the 2nd antenna and the 4th sub-block corresponding to the 4th antenna.

In this embodiment of this application, the second delay-Doppler domain information $S_5$ carried on the fifth sub-block meets: $S_5 = -S_1^{*}$, where $S_1^{*}$ denotes a conjugate of each element of $S_1$, and $S_1$ denotes the first delay-Doppler domain information carried on the first sub-block or denotes information obtained by reordering the first delay-Doppler domain information carried on the first sub-block;

the second delay-Doppler domain information $S_6$ carried on the sixth sub-block meets: $\mathbf{S_6 = S_2^{*}}$, where $S_2^{*}$ denotes a conjugate of each element of $S_2$, and $S_2$ denotes the first delay-Doppler domain information carried on the second sub-block or denotes information obtained by reordering the first delay-Doppler domain information carried on the second sub-block;

the second delay-Doppler domain information $S_7$ carried on the seventh sub-block meets: $S_7 = -S_3^{*}$, where $S_3^{*}$ denotes a conjugate of each element of $S_3$, and $S_3$ denotes the first delay-Doppler domain information carried on the third sub-block or denotes information obtained by reordering the first delay-Doppler domain information carried on the third sub-block; and

the second delay-Doppler domain information $S_8$ carried on the eighth sub-block meets: $\mathbf{S_8 = S_4^{*}}$, where $S_4^{*}$ denotes a conjugate of each element of $S_4$, and $S_4$ denotes the first delay-Doppler domain information carried on the fourth sub-block or denotes information obtained by reordering the first delay-Doppler domain information carried on the fourth sub-block.

For example, in some embodiments, delay-Doppler domain information $S_{11}$ carried on the 1st sub-block of the 1st antenna, delay-Doppler domain information $S_{12}$ carried on the 2nd sub-block of the 1st antenna, delay-Doppler domain information $S_{23}$ carried on the 3rd sub-block of the 2nd antenna, and delay-Doppler domain information $S_{24}$ carried on the 4th sub-block of the 2nd antenna may be configured first. Then delay-Doppler domain information $S_{31}$ carried on the 1st sub-block of the 3rd antenna, delay-Doppler domain information $S_{32}$ carried on the 2nd sub-block of the 3rd antenna, delay-Doppler domain information $S_{43}$ carried on the 3rd sub-block of the 4th antenna, and delay-Doppler domain information $S_{44}$ carried on the 4th sub-block of the 4th antenna are determined based on a mapping relationship for delay-Doppler domain block encoding. The mapping relationship may meet:

$S_{31} = -S_{12}^{*}$, where $S_{12}^{*}$ is obtained by taking a conjugate based on each element in $S_{12}$; $S_{32} = S_{11}^{*}$, where $S_{11}^{*}$ is obtained by taking a conjugate based on each element in $S_{11}$; $S_{43} = -S_{24}^*$, where $S_{24}^*$ is obtained by taking a conjugate based on each element in $S_{24}$; $S_{44} = S_{23}^*$, where $S_{11}^*$ is obtained by taking a conjugate based on each element in $S_{11}$; or

$S_{31} = -\hat{S}_{12}^*$, where $\hat{S}_{12}^*$ is obtained by taking a conjugate based on each element in $\hat{S}_{12}$, and $\hat{S}_{12}$ is obtained by reordering based on $S_{12}$; $S_{32} = \hat{S}_{11}^*$, where $\hat{S}_{11}^*$ is obtained by taking a conjugate based on each element in $\hat{S}_{11}$, and $\hat{S}_{11}$ is obtained by reordering based on $S_{11}$; $S_{43} = -\hat{S}_{24}^*$, where $\hat{S}_{24}^*$ is obtained by taking a conjugate based on each element in $\hat{S}_{24}$, and $\hat{S}_{24}$ is obtained by reordering based on $S_{24}$; $S_{44} = \hat{S}_{23}^*$, where $\hat{S}_{23}^*$ is obtained by taking a conjugate based on each element in $\hat{S}_{23}$, and $\hat{S}_{23}$ is obtained by reordering based on $S_{23}$.

Certainly, in other embodiments, a value of the sub-block on the left of the mapping relationship equal sign may alternatively be first determined and then a value of the sub-block on the right of the equal sign is determined based on the mapping relationship.

Optionally, in some embodiments, in a case that L=4, second delay-Doppler domain information carried on a ninth sub-block is set to be 0, the ninth sub-block being any one sub-block in the part of sub-blocks other than the first sub-block, the second sub-block, the third sub-block, and the fourth sub-block.

Optionally, in some embodiments, a preset position of at least one of the sub-blocks is set to be a first guard period, the preset position including at least one of the following: a preset delay position and a preset Doppler position.

It should be noted that the i-th antenna can be understood as the i-th antenna defined based on a logical order. Assuming that the antenna in this embodiment of this application is a physical antenna, the 1st antenna can be understood as the 1st antenna in an actual order or can be understood as the m-th antenna in an actual order, m being an integer greater than 1 and a value of m being determined based on a logical order.

In this embodiment of this application, the first guard period meets any one of the following:

the first guard periods are all set to be 0s;
the first guard period is set to be a cyclic prefix in a delay direction for a transmit signal of a sub-block in which the first guard period is located;
the first guard period is set to be a cyclic suffix in a delay direction for a transmit signal of a sub-block in which the first guard period is located;
the first guard period is set to be a cyclic prefix in a Doppler direction for a transmit signal of a sub-block in which the first guard period is located; and
the first guard period is set to be a cyclic suffix in a Doppler direction for a transmit signal of a sub-block in which the first guard period is located.

Optionally, a position of providing the first guard period can be set according to actual needs, for example, in some embodiments, the first guard period includes at least one of the following:

a first guard sub-period on at least one boundary of the sub-block in a delay direction; and
a second guard sub-period on at least one boundary of the sub-block in a Doppler direction.

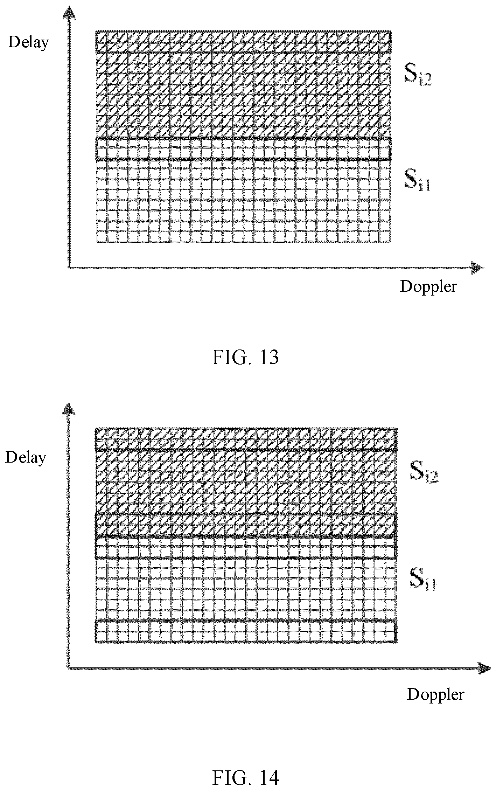

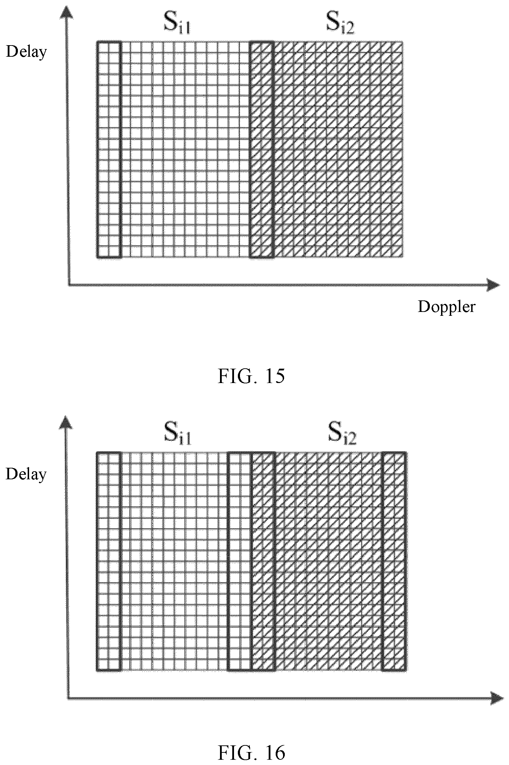

Referring to FIGs. 13 to 17, a bold-line rectangular box indicates a position of providing the guard period. Specifically, the guard period may be provided on at least one boundary in at least one direction of each sub-block. It should be understood that when guard periods are provided on one boundary in a specific direction, positions of the guard periods are located on the same-side boundary of corresponding sub-blocks (as shown in FIG. 13, the positions of the guard periods are located on an upper-side boundary of the corresponding sub-blocks, and as shown in FIG. 15, the positions of the guard periods are located on a left-side boundary of the corresponding sub-blocks). When guard periods are provided on two boundaries in a specific direction, a manner of setting information for the guard periods on two boundaries may be the same or different, for example, guard periods on a boundary of one side may use a cyclic prefix, and guard periods on a boundary of the other side may use a cyclic suffix.

Optionally, in some embodiments, a width of the first guard sub-period is greater than or equal to a maximum delay of a target channel, the target channel being a channel for transmitting the delay-Doppler domain information.

Optionally, in some embodiments, a width of the second guard sub-period is greater than or equal to twice a maximum Doppler of a target channel, the target channel being a channel for transmitting the delay-Doppler domain information.

Optionally, in some embodiments, a pilot is configured in the first guard period.

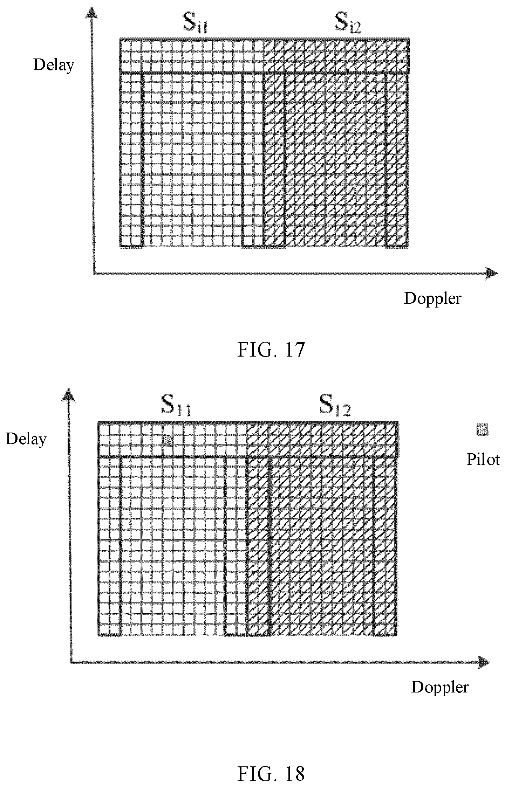

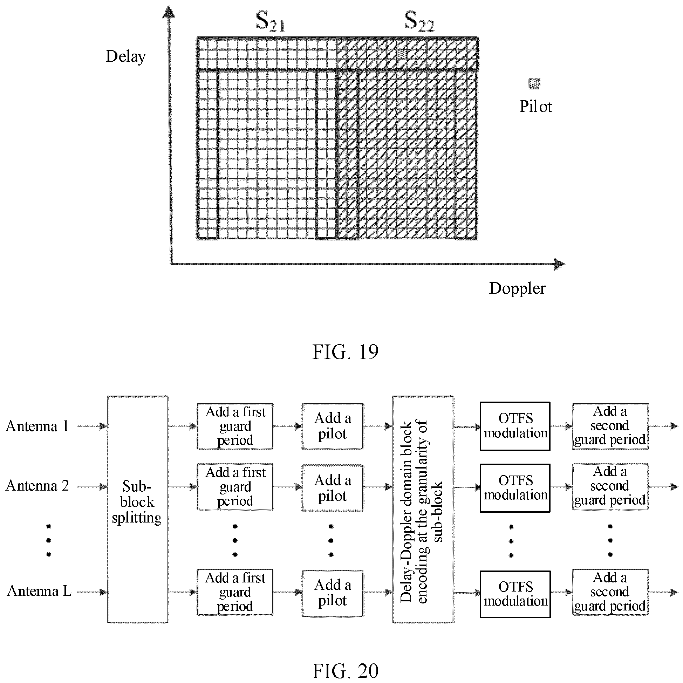

In this embodiment of this application, the pilot may be a pulse pilot or a sequence pilot. In a case of using pulse pilots, the pilots of all antennas are staggered using delay-Doppler domain resources, as shown in FIGs. 18 and 19. In a case of using sequence pilots, the pilots of all antennas are orthogonalized based on a sequence.

Optionally, in some embodiments, after the step of performing, by the transmit end, delay-Doppler domain block encoding on the L antennas at the granularity of sub-block, the method further includes:

transforming, by the transmit end, delay-Doppler domain information obtained through delay-Doppler domain block encoding into time-frequency domain information; and
sending, by the transmit end, the time-frequency domain information.

Optionally, before the sending, by the transmit end, the time-frequency domain information, the method further includes:
configuring, by the transmit end, a second guard period for the time-frequency domain information based on a preset time-domain interval.

In this embodiment of this application, the configuring a second guard period for the time-frequency domain information based on a preset time-domain interval may be understood as setting one or more time domain guard periods at intervals of one time domain interval. It can be understood that the second guard period may be that the second guard period is set to be 0, or is set to be a cyclic prefix, or is set to be a cyclic suffix.

Optionally, in some embodiments, target information is determined by the transmit end or specified by a protocol; and the target information includes at least one of the following:

position information of the L sub-blocks;
rules corresponding to the delay-Doppler domain block encoding;
configuration information for a guard period;
pilot position; and
pilot information.

Optionally, in a case that the target information is determined by the transmit end, the method further includes: sending, by the transmit end, indication information to a receive end, where the indication information is used to indicate the target information.

Optionally, the indication information is carried in at least one of: radio resource control signaling, layer 1 signaling in physical downlink control channel, information in physical downlink shared channel, signaling in a media access control control element, system information block, layer 1 signaling in physical uplink control channel, information 1 in physical random access channel, information 3 in physical random access channel, information A in physical random access channel, information in physical uplink shared channel, Xn interface signaling, PC5 interface signaling, and sidelink interface signaling.

It should be noted that in this embodiment of this application, the indication information may include a plurality of pieces of sub-indication information, and each sub-indication information is used to indicate at least one of the position information of the L sub-blocks, the rule corresponding to delay-Doppler domain block encoding, the configuration information for the guard period, pilot position, and pilot information. The indication information is carried in at least two of the above, each of which may include the same sub-indication information or different sub-indication information.

It should be noted that, for the transmission processing method provided by the embodiments of this application, the execution body may be a transmission processing apparatus, or a control module for executing the transmission processing method in the transmission processing apparatus. In the embodiments of this application, the transmission processing method being performed by the transmission processing apparatus is used as an example to describe the transmission processing apparatus provided in the embodiments of this application.

To better understand this application, a procedure framework of this application is described below with reference to FIG. 20. Specifically, the following procedure steps may be included.

1. Split the delay-Doppler domain resource block of each antenna into sub-blocks in a same splitting manner.
2. Add the first guard period in the delay-Doppler domain.
3. Add a pilot.
4. Perform delay-Doppler domain block encoding at the granularity of sub-block.
5. Perform OTFS modulation.

6. Add the second guard period in the time-frequency domain.

It should be understood that for specific implementation of each of the above processes, reference may be made to the above embodiments of the transmission processing method, and details will not be repeated herein.

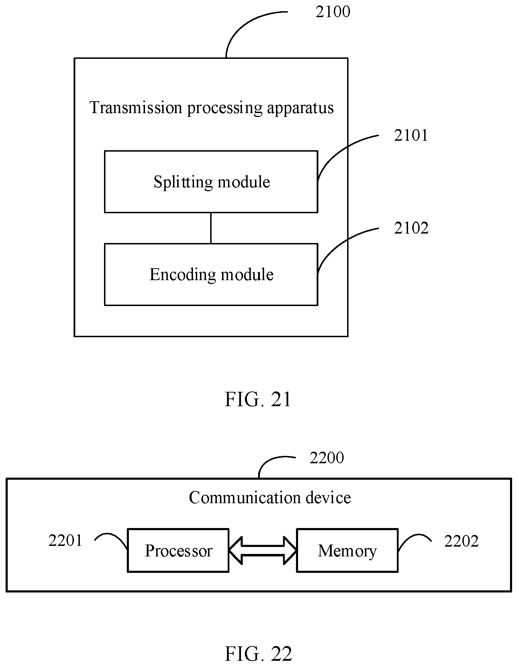

Referring to FIG. 21, FIG. 21 is a structural diagram of a transmission processing apparatus according to an embodiment of this application. As shown in FIG. 21, the transmission processing apparatus 2100 includes:

a splitting module 2101, configured to split a delay-Doppler domain resource block corresponding to each antenna in L antennas of a transmit end into L sub-blocks of equal size, L being an integer greater than 1; and

an encoding module 2102, configured to perform delay-Doppler domain block encoding on the L antennas at the granularity of sub-block.

Optionally, delay-Doppler domain coordinates within each sub-block are continuous or cyclically continuous.

Optionally, a direction of splitting the delay-Doppler domain resource block includes at least one of the following: a delay direction and a Doppler direction.

Optionally, the encoding module 2102 includes:

a determining unit, configured to determine first delay-Doppler domain information carried on part of sub-blocks of L*L sub-blocks; and

a mapping unit, configured to perform mapping on the first delay-Doppler domain information based on a mapping relationship of delay-Doppler domain block encoding to obtain second delay-Doppler domain information carried on remaining sub-blocks of the L*L sub-blocks; where

the L*L sub-blocks are all sub-blocks obtained through splitting delay-Doppler domain resource blocks corresponding to the L antennas.

Optionally, in a case that L=2, the part of sub-blocks include a first sub-block and a second sub-block, and the remaining sub-blocks include a third sub-block and a fourth sub-block; where

the first sub-block is one of the 1st sub-block corresponding to the 1st antenna and the 2nd sub-block corresponding to the 2nd antenna, and the third sub-block is the other of the 1st sub-block corresponding to the 1st antenna and the 2nd sub-block corresponding to the 2nd antenna; and

the second sub-block is one of the 2nd sub-block corresponding to the 1st antenna and the 1st sub-block corresponding to the 2nd antenna, and the fourth sub-block is the other of the 2nd sub-block corresponding to the 1st antenna and the 1st sub-block corresponding to the 2nd antenna.

Optionally, the second delay-Doppler domain information $S_3$ carried on the third sub-block meets: $S_3 = S_1^*$, where $S_1^*$ denotes a conjugate of each element of $S_1$, and $S_1$ denotes the first delay-Doppler domain information carried on the first sub-block or denotes information obtained by reordering the first delay-Doppler domain information carried on the first sub-block; and

the second delay-Doppler domain information $S_4$ carried on the fourth sub-block meets: $S_4 = -S_2^*$, where $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block.

Optionally, in a case that L=4, the part of sub-blocks include a first sub-block, a second sub-block, a third sub-block, and a fourth sub-block, and the remaining sub-blocks include a fifth sub-block, a sixth sub-block, a seventh sub-block, and an eighth sub-block; where

the first sub-block is one of the 2nd sub-block corresponding to the 1st antenna and the 1st sub-block corresponding to the 3rd antenna, and the fifth sub-block is the other of the 2nd sub-block corresponding to the 1st antenna and the 1st sub-block corresponding to the 3rd antenna;

the second sub-block is one of the 1st sub-block corresponding to the 1st antenna and the 2nd sub-block corresponding to the 3rd antenna, and the sixth sub-block is the other of the 1st sub-block corresponding to the 1st antenna and the 2nd sub-block corresponding to the 3rd antenna;

the third sub-block is one of the 4th sub-block corresponding to the 2nd antenna and the 3rd sub-block corresponding

to the 4th antenna, and the seventh sub-block is the other of the 4th sub-block corresponding to the 2nd antenna and the 3rd sub-block corresponding to the 4th antenna; and
the fourth sub-block is one of the 3rd sub-block corresponding to the 2nd antenna and the 4th sub-block corresponding to the 4th antenna, and the eighth sub-block is the other of the 3rd sub-block corresponding to the 2nd antenna and the 4th sub-block corresponding to the 4th antenna.

Optionally, the second delay-Doppler domain information $S_5$ carried on the fifth sub-block meets: $S_5 = -S_1^*$,

where $S_1^*$ denotes a conjugate of each element of $S_1$, and $S_1$ denotes the first delay-Doppler domain information carried on the first sub-block or denotes information obtained by reordering the first delay-Doppler domain information carried on the first sub-block;

the second delay-Doppler domain information $S_6$ carried on the sixth sub-block meets: $S_6 = S_2^*$, where $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block;

the second delay-Doppler domain information $S_7$ carried on the seventh sub-block meets: $S_7 = -S_3^*$, where $S_3^*$ denotes a conjugate of each element of $S_3$, and $S_3$ denotes the first delay-Doppler domain information carried on the third sub-block or denotes information obtained by reordering the first delay-Doppler domain information carried on the third sub-block; and

the second delay-Doppler domain information $S_8$ carried on the eighth sub-block meets: $S_8 = S_4^*$, where $S_4^*$ denotes a conjugate of each element of $S_4$, and $S_4$ denotes the first delay-Doppler domain information carried on the fourth sub-block or denotes information obtained by reordering the first delay-Doppler domain information carried on the fourth sub-block.

Optionally, second delay-Doppler domain information carried on a ninth sub-block is set to be 0, the ninth sub-block being any one sub-block in the part of sub-blocks other than the first sub-block, the second sub-block, the third sub-block, and the fourth sub-block.
Optionally, a preset position of at least one of the sub-blocks is set to be a first guard period, the preset position including at least one of the following: a preset delay position and a preset Doppler position.
Optionally, the first guard period meets any one of the following:

the first guard periods are all set to be 0s;
the first guard period is set to be a cyclic prefix in a delay direction for a transmit signal of a sub-block in which the first guard period is located;
the first guard period is set to be a cyclic suffix in a delay direction for a transmit signal of a sub-block in which the first guard period is located;
the first guard period is set to be a cyclic prefix in a Doppler direction for a transmit signal of a sub-block in which the first guard period is located; and
the first guard period is set to be a cyclic suffix in a Doppler direction for a transmit signal of a sub-block in which the first guard period is located.

Optionally, the first guard period includes at least one of the following:

a first guard sub-period on at least one boundary of the sub-block in a delay direction; and
a second guard sub-period on at least one boundary of the sub-block in a Doppler direction.

Optionally, a width of the first guard sub-period is greater than or equal to a maximum delay of a target channel, the target channel being a channel for transmitting the delay-Doppler domain information.
Optionally, a width of the second guard sub-period is greater than or equal to twice a maximum Doppler of a target channel, the target channel being a channel for transmitting the delay-Doppler domain information.
Optionally, a pilot is configured in the first guard period.
Optionally, the transmission processing apparatus 2100 further includes:

a transform module, configured to transform delay-Doppler domain information obtained through delay-Doppler domain block encoding into time-frequency domain information; and
a sending module, configured to send the time-frequency domain information.

Optionally, the transmission processing apparatus 2100 further includes:
a setting module, configured to configure a second guard period for the time-frequency domain information based on a preset time-domain interval.

Optionally, the second guard period is set to be 0, or is set to be a cyclic prefix, or is set to be a cyclic suffix.

Optionally, target information is determined by the transmit end or specified by a protocol; and the target information includes at least one of the following:

position information of the L sub-blocks;
rules corresponding to the delay-Doppler domain block encoding;
configuration information for a guard period;
pilot position; and
pilot information.

Optionally, in a case that the target information is determined by the transmit end, the transmission processing device 2100 further includes: a sending module, configured to send indication information to a receive end, where the indication information is used to indicate the target information.

Optionally, the indication information is carried in at least one of: radio resource control signaling, layer 1 signaling in physical downlink control channel, information in physical downlink shared channel, signaling in a media access control control element, system information block, layer 1 signaling in physical uplink control channel, information 1 in physical random access channel, information 3 in physical random access channel, information A in physical random access channel, information in physical uplink shared channel, Xn interface signaling, PC5 interface signaling, and sidelink interface signaling.

The transmission processing apparatus provided in this embodiment of this application is capable of implementing the processes that are implemented by the method embodiments in FIG. 4 to FIG. 20. To avoid repetition, details are not described herein again.

The transmission processing apparatus in this embodiment of this application may be an apparatus, or an apparatus or electric device having an operating system, or may be a component, an integrated circuit, or a chip in the terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

Optionally, as shown in FIG. 22, an embodiment of this application further provides a communication device 2200, including a processor 2201, a memory 2202 and a program or instructions stored in the memory 2202 and capable of running on the processor 2201. For example, when the communication device 2200 is a terminal and when the program or instructions are executed by the processor 2201, the processes of the foregoing embodiments of the transmission processing method are implemented, with the same technical effects achieved. When the communication device 2200 is a network-side device and when the program or instructions are executed by the processor 2201, the processes of the foregoing embodiment of the transmission processing method are implemented, with the same technical effects achieved. To avoid repetition, details are not described herein again.

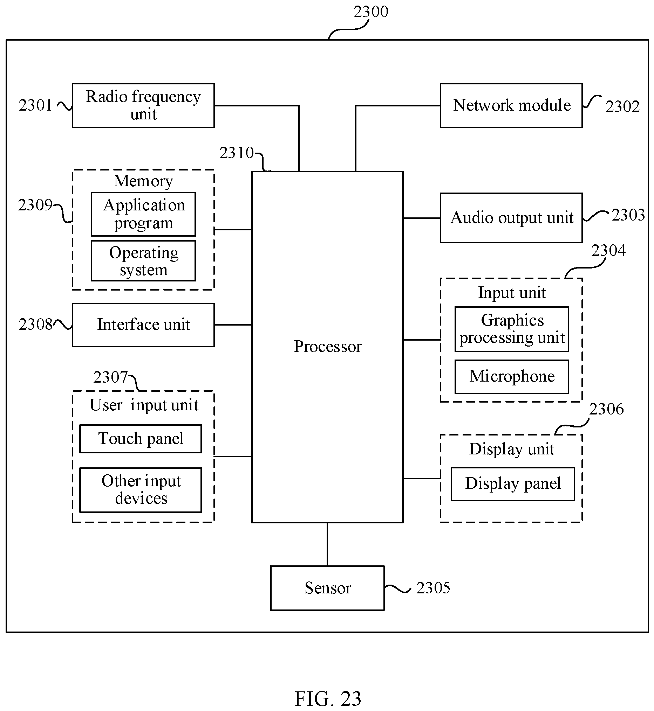

An embodiment of this application further provides a terminal, including a processor and a communication interface, where the processor is configured to split a delay-Doppler domain resource block corresponding to each antenna in L antennas of the terminal into L sub-blocks of equal size, L being an integer greater than 1; and perform delay-Doppler domain block encoding on the L antennas at the granularity of sub-block. The terminal embodiments correspond to the foregoing terminal-side method embodiments, and the implementation processes and implementations of the foregoing method embodiments can be applied to the terminal embodiments, with the same technical effects achieved. Specifically, FIG. 23 is a schematic diagram of a hardware structure of a terminal for implementing the embodiments of this application.

The terminal 2300 includes but is not limited to at least part of components such as a radio frequency unit 2301, a network module 2302, an audio output unit 2303, an input unit 2304, a sensor 2305, a display unit 2306, a user input unit 2307, an interface unit 2308, a memory 2309, and a processor 2310.

Persons skilled in the art can understand that the terminal 2300 may further include a power supply (for example, a battery) supplying power to the components, and the power supply may be logically connected to the processor 2310 through a power management system. In this way, functions such as charge management, discharge management, and power consumption management are implemented by using the power management system. The structure of the terminal shown in FIG. 23 does not constitute any limitation on the terminal. The terminal may include more or fewer components than shown in the figure, or a combination of some components, or the components disposed differently. Details are not described herein again.

It can be understood that in this embodiment of this application, the input unit 2304 may include a graphics processing unit (Graphics Processing Unit, GPU) and a microphone. The graphics processing unit processes image data of a still picture or video obtained by an image capture apparatus (such as a camera) in a video capture mode or an image capture mode. The display unit may include a display panel, and the display panel may be configured in a form of a liquid crystal display, an organic light-emitting diode, and the like. The user input unit may include a touch panel and other input devices. The touch panel is also referred to as a touchscreen. The touch panel may include two parts: a touch detection apparatus and a touch controller. The other input devices may include but are not limited to a physical keyboard, a function key (such as a volume control key or a power on/off key), a trackball, a mouse, a joystick, and the like. Details are not described herein.

In this embodiment of this application, the radio frequency unit 2301 receives downlink data from a network-side device, and then sends the downlink data to the processor 2310 for processing; and also sends uplink data to the network-side device. Generally, the radio frequency unit 2301 includes but is not limited to an antenna, at least one amplifier, a transceiver, a coupler, a low noise amplifier, a duplexer, and the like.

The memory 2309 may be configured to store software programs or instructions and various data. The memory 109 may include a program or instruction storage area and a data storage area. The program or instruction storage area may store an operating system, an application program or instruction required by at least one function (for example, a sound playback function or an image playback function), and the like. In addition, the memory 2309 may include a high-speed random access memory, and may further include a non-transitory memory. The non-transitory memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-transitory solid-state storage devices.

The processor 2310 may include one or more processing units. Optionally, an application processor and a modem processor may be integrated in the processor 2310. The application processor primarily processes an operating system, user interfaces, application programs or instructions, and the like. The modem processor primarily processes radio communication, for example, being a baseband processor. It can be understood that the modem processor may alternatively be not integrated in the processor 2310.

The processor 2310 is configured to split a delay-Doppler domain resource block corresponding to each antenna in L antennas of the terminal into L sub-blocks of equal size, L being an integer greater than 1; and perform delay-Doppler domain block encoding on the L antennas at the granularity of sub-block.

In this embodiment of this application, the delay-Doppler domain resource block corresponding to each antenna in the L antennas of the terminal into L sub-blocks of equal size; and delay-Doppler domain block encoding is performed on the L antennas at the granularity of sub-block. This enables the application of MIMO in the delay-Doppler domain, thereby improving transmission performance.

Optionally, delay-Doppler domain coordinates within each sub-block are continuous or cyclically continuous.

Optionally, a direction of splitting the delay-Doppler domain resource block includes at least one of the following: a delay direction and a Doppler direction.

Optionally, the processor 2310 is specifically configured to determine first delay-Doppler domain information carried on part of sub-blocks of L*L sub-blocks; and perform mapping on the first delay-Doppler domain information based on a mapping relationship of delay-Doppler domain block encoding to obtain second delay-Doppler domain information carried on remaining sub-blocks of the L*L sub-blocks; where
the L*L sub-blocks are all sub-blocks obtained through splitting delay-Doppler domain resource blocks corresponding to the L antennas.

Optionally, in a case that L=2, the part of sub-blocks include a first sub-block and a second sub-block, and the remaining sub-blocks include a third sub-block and a fourth sub-block; where

the first sub-block is one of the $1^{st}$ sub-block corresponding to the $1^{st}$ antenna and the $2^{nd}$ sub-block corresponding to the $2^{nd}$ antenna, and the third sub-block is the other of the $1^{st}$ sub-block corresponding to the $1^{st}$ antenna and the $2^{nd}$ sub-block corresponding to the $2^{nd}$ antenna; and
the second sub-block is one of the $2^{nd}$ sub-block corresponding to the $1^{st}$ antenna and the $1^{st}$ sub-block corresponding to the $2^{nd}$ antenna, and the fourth sub-block is the other of the $2^{nd}$ sub-block corresponding to the $1^{st}$ antenna and the $1^{st}$ sub-block corresponding to the $2^{nd}$ antenna.

Optionally, the second delay-Doppler domain information $S_3$ carried on the third sub-block meets: $\mathbf{S_3} = \mathbf{S_1^*}$

, where $S_1^*$ denotes a conjugate of each element of $S_1$, and $S_1$ denotes the first delay-Doppler domain information carried on the first sub-block or denotes information obtained by reordering the first delay-Doppler domain information carried on the first sub-block; and

the second delay-Doppler domain information $S_4$ carried on the fourth sub-block meets: $S_4 = -S_2^*$, where $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block.

Optionally, in a case that L=4, the part of sub-blocks include a first sub-block, a second sub-block, a third sub-block, and a fourth sub-block, and the remaining sub-blocks include a fifth sub-block, a sixth sub-block, a seventh sub-block, and an eighth sub-block; where

the first sub-block is one of the 2nd sub-block corresponding to the 1st antenna and the 1st sub-block corresponding to the 3rd antenna, and the fifth sub-block is the other of the 2nd sub-block corresponding to the 1st antenna and the 1st sub-block corresponding to the 3rd antenna;

the second sub-block is one of the 1st sub-block corresponding to the 1st antenna and the 2nd sub-block corresponding to the 3rd antenna, and the sixth sub-block is the other of the 1st sub-block corresponding to the 1st antenna and the 2nd sub-block corresponding to the 3rd antenna;

the third sub-block is one of the 4th sub-block corresponding to the 2nd antenna and the 3rd sub-block corresponding to the 4th antenna, and the seventh sub-block is the other of the 4th sub-block corresponding to the 2nd antenna and the 3rd sub-block corresponding to the 4th antenna; and

the fourth sub-block is one of the 3rd sub-block corresponding to the 2nd antenna and the 4th sub-block corresponding to the 4th antenna, and the eighth sub-block is the other of the 3rd sub-block corresponding to the 2nd antenna and the 4th sub-block corresponding to the 4th antenna.

Optionally, the second delay-Doppler domain information $S_5$ carried on the fifth sub-block meets: $S_5 = -S_1^*$,

where $S_1^*$ denotes a conjugate of each element of $S_1$, and $S_1$ denotes the first delay-Doppler domain information carried on the first sub-block or denotes information obtained by reordering the first delay-Doppler domain information carried on the first sub-block;

the second delay-Doppler domain information $S_6$ carried on the sixth sub-block meets: $\mathbf{S_6} = \mathbf{S_2^*}$, where $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block;

the second delay-Doppler domain information $S_7$ carried on the seventh sub-block meets: $S_7 = -S_3^*$, where $S_3^*$ denotes a conjugate of each element of $S_3$, and $S_3$ denotes the first delay-Doppler domain information carried on the third sub-block or denotes information obtained by reordering the first delay-Doppler domain information carried on the third sub-block; and

the second delay-Doppler domain information $S_8$ carried on the eighth sub-block meets: $\mathbf{S_8} = \mathbf{S_4^*}$, where $S_4^*$ denotes a conjugate of each element of $S_4$, and $S_4$ denotes the first delay-Doppler domain information carried on the fourth sub-block or denotes information obtained by reordering the first delay-Doppler domain information carried on the fourth sub-block.

Optionally, second delay-Doppler domain information carried on a ninth sub-block is set to be 0, the ninth sub-block being any one sub-block in the part of sub-blocks other than the first sub-block, the second sub-block, the third sub-block, and the fourth sub-block.

Optionally, a preset position of at least one of the sub-blocks is set to be a first guard period, the preset position including at least one of the following: a preset delay position and a preset Doppler position.

Optionally, the first guard period meets any one of the following:

the first guard periods are all set to be 0s;

the first guard period is set to be a cyclic prefix in a delay direction for a transmit signal of a sub-block in which the first guard period is located;

the first guard period is set to be a cyclic suffix in a delay direction for a transmit signal of a sub-block in which the first guard period is located;

the first guard period is set to be a cyclic prefix in a Doppler direction for a transmit signal of a sub-block in which the first guard period is located; and

the first guard period is set to be a cyclic suffix in a Doppler direction for a transmit signal of a sub-block in which the first guard period is located.

Optionally, the first guard period includes at least one of the following:

a first guard sub-period on at least one boundary of the sub-block in a delay direction; and
a second guard sub-period on at least one boundary of the sub-block in a Doppler direction.

Optionally, a width of the first guard sub-period is greater than or equal to a maximum delay of a target channel, the target channel being a channel for transmitting the delay-Doppler domain information.

Optionally, a width of the second guard sub-period is greater than or equal to twice a maximum Doppler of a target channel, the target channel being a channel for transmitting the delay-Doppler domain information.

Optionally, a pilot is configured in the first guard period.

Optionally, the processor 2310 is further configured to transform delay-Doppler domain information obtained through delay-Doppler domain block encoding into time-frequency domain information; and

the radio frequency unit 2301 is configured to send the time-frequency domain information.

Optionally, the processor 2310 is further configured to configure a second guard period for the time-frequency domain information by the transmit end based on a preset time-domain interval.

Optionally, the second guard period is set to be 0, or is set to be a cyclic prefix, or is set to be a cyclic suffix.

Optionally, target information is determined by the terminal or specified by a protocol; and the target information includes at least one of the following:

position information of the L sub-blocks;
rules corresponding to the delay-Doppler domain block encoding;
configuration information for a guard period;
pilot position; and
pilot information.

Optionally, in a case that the target information is determined by the terminal, the radio frequency unit 2301 is further configured to send indication information to a receive end, where the indication information is used to indicate the target information.

Optionally, the indication information is carried in at least one of: radio resource control signaling, layer 1 signaling in physical downlink control channel, information in physical downlink shared channel, signaling in a media access control control element, system information block, layer 1 signaling in physical uplink control channel, information 1 in physical random access channel, information 3 in physical random access channel, information A in physical random access channel, information in physical uplink shared channel, Xn interface signaling, PC5 interface signaling, and sidelink interface signaling.

An embodiment of this application further provides a network-side device, including a processor and a communication interface, where the processor is configured to split a delay-Doppler domain resource block corresponding to each antenna in L antennas of the network-side device into L sub-blocks of equal size, L being an integer greater than 1; and perform delay-Doppler domain block encoding on the L antennas at the granularity of sub-block. The network-side device embodiments correspond to the foregoing network-side device method embodiments, and the implementation processes and implementations of the foregoing method embodiments can be applied to the network-side device embodiments, with the same technical effects achieved.

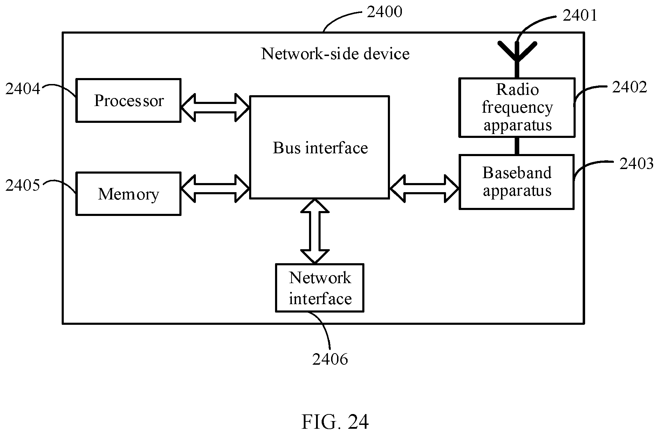

Specifically, an embodiment of this application further provides a network-side device. As shown in FIG. 24, the network-side device 2400 includes an antenna 2401, a radio frequency apparatus 2402, and a baseband apparatus 2403. The antenna 2401 is connected to the radio frequency apparatus 2402. In an uplink direction, the radio frequency apparatus 2402 receives information by using the antenna 2401, and sends the received information to the baseband apparatus 2403 for processing. In a downlink direction, the baseband apparatus 2403 processes to-be-sent information, and sends the information to the radio frequency apparatus 2402; and the radio frequency apparatus 2402 processes the received information and then sends the information out by using the antenna 2401.

The frequency band processing apparatus may be located in the baseband apparatus 2403. The method performed by the network-side device in the foregoing embodiments may be implemented in the baseband apparatus 2403, and the baseband apparatus 2403 includes a processor 2404 and a memory 2405.

The baseband apparatus 2403 may include, for example, at least one baseband board, where a plurality of chips are disposed on the baseband board. As shown in FIG. 24, one of the chips is, for example, the processor 2404, connected to the memory 2405, to invoke a program in the memory 2405 to perform the operation of the network-side device shown in the foregoing method embodiment.

The baseband apparatus 2403 may further include a network interface 2406, configured to exchange information with the radio frequency apparatus 2402, where the interface is, for example, a common public radio interface (common public radio interface, CPRI for short).

Specifically, the network-side device in this embodiment of this application further includes: instructions or a program stored in the memory 2405 and capable of running on the processor 2404. The processor 2404 invokes the instructions or program in the memory 2405 to execute the method executed by the modules shown in FIG. 21, with the same technical effects achieved. To avoid repetition, details are not described herein again.

An embodiment of this application further provides a readable storage medium, where a program or an instruction is stored in the readable storage medium. When the program or instruction is executed by a processor, the processes of the foregoing transmission processing method embodiment can be implemented, with same technical effects achieved. To avoid repetition, details are not described herein again.

The processor is the processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing transmission processing method embodiments, with the same technical effects achieved. To avoid repetition, details are not repeated herein.

It should be understood that the chip in the embodiments of this application may also be referred to as a system-level chip, a system chip, a chip system, a system on chip, or the like.

An embodiment of this application further provides a computer program product, where the computer program product is stored in a non-transitory storage medium, and when being executed by at least one processor, the computer program product is configured to implement the processes of the foregoing transmission processing method embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a base station, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A transmission processing method, comprising:

   splitting, by a transmit end, a delay-Doppler domain resource block corresponding to each antenna in L antennas into L sub-blocks of equal size, L being an integer greater than 1; and
   performing, by the transmit end, delay-Doppler domain block encoding on the L antennas at the granularity of sub-block.

2. The method according to claim 1, wherein delay-Doppler domain coordinates within each of the sub-blocks are continuous or cyclically continuous.

3. The method according to claim 1, wherein a direction of splitting the delay-Doppler domain resource block comprises at least one of the following: a delay direction and a Doppler direction.

4. The method according to claim 1, wherein the performing, by the transmit end, delay-Doppler domain block encoding on the L antennas at the granularity of sub-block comprises:

   determining first delay-Doppler domain information carried on part of sub-blocks of L*L sub-blocks; and
   performing mapping on the first delay-Doppler domain information based on a mapping relationship of delay-Doppler domain block encoding to obtain second delay-Doppler domain information carried on remaining sub-blocks of the L*L sub-blocks; wherein
   the L*L sub-blocks are all sub-blocks obtained through splitting delay-Doppler domain resource blocks corresponding to the L antennas.

5. The method according to claim 4, wherein in a case that L=2, the part of sub-blocks comprise a first sub-block and a second sub-block, and the remaining sub-blocks comprise a third sub-block and a fourth sub-block; wherein

   the first sub-block is one of the 1st sub-block corresponding to the 1st antenna and the 2nd sub-block corresponding to the 2nd antenna, and the third sub-block is the other of the 1st sub-block corresponding to the 1st antenna and the 2nd sub-block corresponding to the 2nd antenna; and
   the second sub-block is one of the 2nd sub-block corresponding to the 1st antenna and the 1st sub-block corresponding to the 2nd antenna, and the fourth sub-block is the other of the 2nd sub-block corresponding to the 1st antenna and the 1st sub-block corresponding to the 2nd antenna.

6. The method according to claim 5, wherein

   the second delay-Doppler domain information $S_3$ carried on the third sub-block meets: $$S_3 = S_1^*$$, wherein
   $S_1^*$ denotes a conjugate of each element of $S_1$, and $S_1$ denotes the first delay-Doppler domain information carried on the first sub-block or denotes information obtained by reordering the first delay-Doppler domain information carried on the first sub-block; and

   the second delay-Doppler domain information $S_4$ carried on the fourth sub-block meets: $$S_4 = -S_2^*$$, wherein
   $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block.

7. The method according to claim 4, wherein in a case that L=4, the part of sub-blocks comprise a first sub-block, a second sub-block, a third sub-block, and a fourth sub-block, and the remaining sub-blocks comprise a fifth sub-block, a sixth sub-block, a seventh sub-block, and an eighth sub-block; wherein

   the first sub-block is one of the 2nd sub-block corresponding to the 1st antenna and the 1st sub-block corresponding to the 3rd antenna, and the fifth sub-block is the other of the 2nd sub-block corresponding to the 1st antenna and the 1st sub-block corresponding to the 3rd antenna;
   the second sub-block is one of the 1st sub-block corresponding to the 1st antenna and the 2nd sub-block corre-

sponding to the 3<sup>rd</sup> antenna, and the sixth sub-block is the other of the 1<sup>st</sup> sub-block corresponding to the 1<sup>st</sup> antenna and the 2<sup>nd</sup> sub-block corresponding to the 3<sup>rd</sup> antenna;

the third sub-block is one of the 4<sup>th</sup> sub-block corresponding to the 2<sup>nd</sup> antenna and the 3<sup>rd</sup> sub-block corresponding to the 4<sup>th</sup> antenna, and the seventh sub-block is the other of the 4<sup>th</sup> sub-block corresponding to the 2<sup>nd</sup> antenna and the 3<sup>rd</sup> sub-block corresponding to the 4<sup>th</sup> antenna; and

the fourth sub-block is one of the 3<sup>rd</sup> sub-block corresponding to the 2<sup>nd</sup> antenna and the 4<sup>th</sup> sub-block corresponding to the 4<sup>th</sup> antenna, and the eighth sub-block is the other of the 3<sup>rd</sup> sub-block corresponding to the 2<sup>nd</sup> antenna and the 4<sup>th</sup> sub-block corresponding to the 4<sup>th</sup> antenna.

8. The method according to claim 7, wherein

the second delay-Doppler domain information $S_5$ carried on the fifth sub-block meets: $S_5 = -S_1^*$ , wherein $S_1^*$ denotes a conjugate of each element of $S_1$ , and $S_1$ denotes the first delay-Doppler domain information carried on the first sub-block or denotes information obtained by reordering the first delay-Doppler domain information carried on the first sub-block;

the second delay-Doppler domain information $S_6$ carried on the sixth sub-block meets: $S_6 = S_2^*$ , wherein $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block;

the second delay-Doppler domain information $S_7$ carried on the seventh sub-block meets: $S_7 = -S_3^*$ , wherein $S_3^*$ denotes a conjugate of each element of $S_3$, and $S_3$ denotes the first delay-Doppler domain information carried on the third sub-block or denotes information obtained by reordering the first delay-Doppler domain information carried on the third sub-block; and

the second delay-Doppler domain information $S_8$ carried on the eighth sub-block meets: $S_8 = S_4^*$ , wherein $S_4^*$ denotes a conjugate of each element of $S_4$, and $S_4$ denotes the first delay-Doppler domain information carried on the fourth sub-block or denotes information obtained by reordering the first delay-Doppler domain information carried on the fourth sub-block.

9. The method according to claim 7, wherein second delay-Doppler domain information carried on a ninth sub-block is set to be 0, the ninth sub-block being any one sub-block in the part of sub-blocks other than the first sub-block, the second sub-block, the third sub-block, and the fourth sub-block.

10. The method according to claim 1, wherein a preset position of at least one of the sub-blocks is set to be a first guard period, the preset position comprising at least one of the following: a preset delay position and a preset Doppler position.

11. The method according to claim 10, wherein the first guard period meets any one of the following:

the first guard periods are all set to be 0s;
the first guard period is set to be a cyclic prefix in a delay direction for a transmit signal of a sub-block in which the first guard period is located;
the first guard period is set to be a cyclic suffix in a delay direction for a transmit signal of a sub-block in which the first guard period is located;
the first guard period is set to be a cyclic prefix in a Doppler direction for a transmit signal of a sub-block in which the first guard period is located; and
the first guard period is set to be a cyclic suffix in a Doppler direction for a transmit signal of a sub-block in which the first guard period is located.

12. The method according to claim 10, wherein the first guard period comprises at least one of the following:

a first guard sub-period on at least one boundary of the sub-block in a delay direction; and
a second guard sub-period on at least one boundary of the sub-block in a Doppler direction.

13. The method according to claim 12, wherein a width of the first guard sub-period is greater than or equal to a maximum delay of a target channel, the target channel being a channel for transmitting the delay-Doppler domain information.

14. The method according to claim 12, wherein a width of the second guard sub-period is greater than or equal to twice a maximum Doppler of a target channel, the target channel being a channel for transmitting the delay-Doppler domain information.

15. The method according to claim 10, wherein a pilot is configured in the first guard period.

16. The method according to claim 1, wherein after the step of performing, by the transmit end, delay-Doppler domain block encoding on the L antennas at the granularity of sub-block, the method further comprises:

transforming, by the transmit end, delay-Doppler domain information obtained through delay-Doppler domain block encoding into time-frequency domain information; and
sending, by the transmit end, the time-frequency domain information.

17. The method according to claim 16, wherein before the sending, by the transmit end, the time-frequency domain information, the method further comprises:
configuring, by the transmit end, a second guard period for the time-frequency domain information based on a preset time-domain interval.

18. The method according to claim 17, wherein the second guard period is set to be 0, or is set to be a cyclic prefix, or is set to be a cyclic suffix.

19. The method according to claim 1, wherein target information is determined by the transmit end or specified by a protocol; and the target information comprises at least one of the following:

position information of the L sub-blocks;
rules corresponding to the delay-Doppler domain block encoding;
configuration information for a guard period;
pilot position; and
pilot information.

20. The method according to claim 19, wherein in a case that the target information is determined by the transmit end, the method further comprises:
sending, by the transmit end, indication information to a receive end, wherein the indication information is used to indicate the target information.

21. The method according to claim 20, wherein the indication information is carried in at least one of: radio resource control signaling, layer 1 signaling in physical downlink control channel, information in physical downlink shared channel, signaling in a media access control control element, system information block, layer 1 signaling in physical uplink control channel, information 1 in physical random access channel, information 3 in physical random access channel, information A in physical random access channel, information in physical uplink shared channel, Xn interface signaling, PC5 interface signaling, and sidelink interface signaling.

22. A transmission processing apparatus, comprising:

a splitting module, configured to split a delay-Doppler domain resource block corresponding to each antenna in L antennas of a transmit end into L sub-blocks of equal size, L being an integer greater than 1; and
an encoding module, configured to perform delay-Doppler domain block encoding on the L antennas at the granularity of sub-block.

23. The apparatus according to claim 22, wherein delay-Doppler domain coordinates within each of the sub-blocks are continuous or cyclically continuous.

**24.** The apparatus according to claim 22, wherein a direction of splitting the delay-Doppler domain resource block comprises at least one of the following: a delay direction and a Doppler direction.

**25.** The apparatus according to claim 22, wherein the encoding module comprises:

a determining unit, configured to determine first delay-Doppler domain information carried on part of sub-blocks of L*L sub-blocks; and
a mapping unit, configured to perform mapping on the first delay-Doppler domain information based on a mapping relationship of delay-Doppler domain block encoding to obtain second delay-Doppler domain information carried on remaining sub-blocks of the L*L sub-blocks; wherein
the L*L sub-blocks are all sub-blocks obtained through splitting delay-Doppler domain resource blocks corresponding to the L antennas.

**26.** The apparatus according to claim 25, wherein in a case that L=2, the part of sub-blocks comprise a first sub-block and a second sub-block, and the remaining sub-blocks comprise a third sub-block and a fourth sub-block; wherein

the first sub-block is one of the 1st sub-block corresponding to the 1st antenna and the 2nd sub-block corresponding to the 2nd antenna, and the third sub-block is the other of the 1st sub-block corresponding to the 1st antenna and the 2nd sub-block corresponding to the 2nd antenna; and
the second sub-block is one of the 2nd sub-block corresponding to the 1st antenna and the 1st sub-block corresponding to the 2nd antenna, and the fourth sub-block is the other of the 2nd sub-block corresponding to the 1st antenna and the 1st sub-block corresponding to the 2nd antenna.

**27.** The apparatus according to claim 26, wherein

the second delay-Doppler domain information $S_3$ carried on the third sub-block meets: $\mathbf{S_3} = \mathbf{S_1^*}$, wherein $S_1^*$ denotes a conjugate of each element of $S_1$, and $S_1$ denotes the first delay-Doppler domain information carried on the first sub-block or denotes information obtained by reordering the first delay-Doppler domain information carried on the first sub-block; and

the second delay-Doppler domain information $S_4$ carried on the fourth sub-block meets: $S_4 = -S_2^*$, wherein $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block.

**28.** The apparatus according to claim 25, wherein in a case that L=4, the part of sub-blocks comprise a first sub-block, a second sub-block, a third sub-block, and a fourth sub-block, and the remaining sub-blocks comprise a fifth sub-block, a sixth sub-block, a seventh sub-block, and an eighth sub-block; wherein

the first sub-block is one of the 2nd sub-block corresponding to the 1st antenna and the 1st sub-block corresponding to the 3rd antenna, and the fifth sub-block is the other of the 2nd sub-block corresponding to the 1st antenna and the 1st sub-block corresponding to the 3rd antenna;
the second sub-block is one of the 1st sub-block corresponding to the 1st antenna and the 2nd sub-block corresponding to the 3rd antenna, and the sixth sub-block is the other of the 1st sub-block corresponding to the 1st antenna and the 2nd sub-block corresponding to the 3rd antenna;
the third sub-block is one of the 4th sub-block corresponding to the 2nd antenna and the 3rd sub-block corresponding to the 4th antenna, and the seventh sub-block is the other of the 4th sub-block corresponding to the 2nd antenna and the 3rd sub-block corresponding to the 4th antenna; and
the fourth sub-block is one of the 3rd sub-block corresponding to the 2nd antenna and the 4th sub-block corresponding to the 4th antenna, and the eighth sub-block is the other of the 3rd sub-block corresponding to the 2nd antenna and the 4th sub-block corresponding to the 4th antenna.

**29.** The apparatus according to claim 28, wherein

the second delay-Doppler domain information $S_5$ carried on the fifth sub-block meets: $S_5 = -S_1^*$, wherein $S_1^*$ denotes a conjugate of each element of $S_1$, and $S_1$ denotes the first delay-Doppler domain information carried on the first sub-block or denotes information obtained by reordering the first delay-Doppler domain information carried on the first sub-block;

the second delay-Doppler domain information $S_6$ carried on the sixth sub-block meets: $S_6 = S_2^*$, wherein $S_2^*$ denotes a conjugate of each element of $S_2$, and $S_2$ denotes the first delay-Doppler domain information carried on the second sub-block or denotes information obtained by reordering the first delay-Doppler domain information carried on the second sub-block;

the second delay-Doppler domain information $S_7$ carried on the seventh sub-block meets: $S_7 = -S_3^*$, wherein $S_3^*$ denotes a conjugate of each element of $S_3$, and $S_3$ denotes the first delay-Doppler domain information carried on the third sub-block or denotes information obtained by reordering the first delay-Doppler domain information carried on the third sub-block; and

the second delay-Doppler domain information $S_8$ carried on the eighth sub-block meets: $S_8 = S_4^*$, wherein $S_4^*$ denotes a conjugate of each element of $S_4$, and $S_4$ denotes the first delay-Doppler domain information carried on the fourth sub-block or denotes information obtained by reordering the first delay-Doppler domain information carried on the fourth sub-block.

30. A communication device, comprising a memory, a processor, and a program stored in the memory and capable of running on the processor, wherein when the program is executed by the processor, the steps of the transmission processing method according to any one of claims 1 to 21 are implemented.

31. A readable storage medium, wherein the readable storage medium stores a program or instructions, and when the program or instructions are executed by a processor, the steps of the transmission processing method according to any one of claims 1 to 21 are implemented.

32. A chip, wherein the chip comprises a processor and a communication interface, the communication interface is coupled to the processor, and the processor is configured to execute a program or an instruction of a network device to implement the steps of the transmission processing method according to any one of claims 1 to 21.

33. A computer program product, wherein the computer program product is stored in a non-volatile storage medium, and the computer program product is executed by at least one processor to implement the steps of the transmission processing method according to any one of claims 1 to 21

FIG. 1

FIG. 2

301    302

FIG. 3

| A transmit end splits a delay-Doppler domain resource block corresponding to each antenna in L antennas into L sub-blocks of equal size | 401 |
| The transmit end performs delay-Doppler domain block encoding on the L antennas at the granularity of sub-block | 402 |

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

2100

Transmission processing apparatus

2101

Splitting module

2102

Encoding module

FIG. 21

2200

Communication device

2201 Processor ⟺ Memory 2202

FIG. 22

FIG. 23

FIG. 24

<table>
<tr><td colspan="2"><b>INTERNATIONAL SEARCH REPORT</b></td><td>International application No.<br><b>PCT/CN2022/101453</b></td></tr>
</table>

| A. | CLASSIFICATION OF SUBJECT MATTER |
|---|---|

H04L 1/00(2006.01)i;  H04B 7/0413(2017.01)i

According to International Patent Classification (IPC) or to both national classification and IPC

| B. | FIELDS SEARCHED |
|---|---|

Minimum documentation searched (classification system followed by classification symbols)

H04L; H04B

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; IEEE; 3GPP: 正交时频空, 延迟, 时延, 多普勒, 多输入多输出, 多天线, 资源块, 划分, 拆分, 分块, 编码, OTFS, delay, Doppler, MIMO, multi+ 1w antenna?, RB, resource block?, divid+, cod+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112087247 A (XIDIAN UNIVERSITY) 15 December 2020 (2020-12-15)<br>description, paragraphs [0010]-[0098] | 1-33 |
| A | CN 111884975 A (BEIJING INSTITUTE OF TECHNOLOGY) 03 November 2020 (2020-11-03)<br>description, paragraphs [0013]-[0037] | 1-33 |
| A | CN 109196812 A (COHERE TECHNOLOGIES, INC.) 11 January 2019 (2019-01-11)<br>entire document | 1-33 |
| A | US 2020119868 A1 (COHERE TECHNOLOGIES, INC.) 16 April 2020 (2020-04-16)<br>entire document | 1-33 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 August 2022** | **15 September 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 112087247 | A | 15 December 2020 | CN | 112087247 | B | 08 October 2021 |
| CN | 111884975 | A | 03 November 2020 | CN | 111884975 | B | 18 May 2021 |
| CN | 109196812 | A | 11 January 2019 | US | 2017288710 | A1 | 05 October 2017 |
| | | | | EP | 3437197 | A1 | 06 February 2019 |
| | | | | WO | 2017173461 | A1 | 05 October 2017 |
| | | | | KR | 20180129897 | A | 05 December 2018 |
| US | 2020119868 | A1 | 16 April 2020 | WO | 2018106731 | A1 | 14 June 2018 |
| | | | | EP | 3549200 | A1 | 09 October 2019 |

International application No.

**PCT/CN2022/101453**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110739227